# EUROPEAN PATENT SPECIFICATION

(11) **EP 1 683 835 B1**
(45) Date of publication and mention of the grant of the patent: **06.03.2013**
(21) Application number: 04788313.7
(22) Date of filing: 29.09.2004
(51) Int. Cl.: C08L 23/16, C08K 3/22, C08K 5/14, C09K 3/10, F16J 15/10

(54) **EPDM COMPOSITION**
EPDM-ZUSAMMENSETZUNG
COMPOSITION D'EPDM

(30) Priority: 11.11.2003 JP 2003380695
(43) Date of publication of application: 26.07.2006
(73) Proprietor: NOK CORPORATION, Tokyo 105-8585 (JP)
(72) Inventor: HORIE, Satoshi, c/o NOK Corporation, Aso-Gun, Kumamoto 8692231 (JP); KUDO, Masashi, c/o NOK Corporation, Fujisawa-shi, Kanagawa 2510042 (JP); FUJIMOTO, Kenichi, c/o NOK Corporation, Fujisawa-shi, Kanagawa 2510042 (JP)
(74) Representative: HOFFMANN EITLE
(86) International application number: PCT/JP2004/014247
(87) International publication number: WO 2005/044912

(56) References cited:
- JP-A- 2 252 746
- JP-A- 4 011 645
- JP-A- 7 330 991
- JP-A- 8 188 685
- JP-A- 59 129 242
- JP-A- 2002 275 302
- JP-A- 2002 363 361
- JP-B- 47 010 227
- US-A- 5 162 441
- US-A1- 2002 058 759

## Description

### TECHNICAL FIELD

The present invention relates to an EPDM composition. More particularly, the invention relates to an EPDM composition More particularly, the invention relates to an EPDM composition preferably for use as vulcanization-molding materials for hot water-resistant seal parts.

### BACKGROUND ART

In one aspect, the longevity of seal parts such as gaskets, packings, O rings, depends mainly on compression set characteristics. Thus, the compression set characteristics of seal parts can serve as an important characteristic value and can be considered as an index of longevity. The compression set characteristics depend not only on formulation of rubber components, but in case of EPDM (ethylene · propylene·diene copolymerization rubber) they also depend on the type of copolymerized diene component.

The diene component for use in EPDM includes several types. Typically, 5-ethylidene-2-norbornene [ENB], dicyclopentadiene [DCPD], vinylydene norbonene [VNB] can be used. However, ENB-copolymerized EPDM has a poor hot water resistance at 250°C or higher, DCPD-copolymerized EPDM has poor compression set characteristics, and VNB-copolymerized EPDM has a poor tensile strength, as disadvantages, respectively. In production of hot water-resistant seal parts of long longevity and high performance, EPDM produced by copolymerization of any type of such diene components have not been satisfactory owing to said disadvantages. US A 2002/058759, US A 5162441, JP A 59129242, JP 2252746 also relate to rubber composition comprising EPDM.
Patent literature 1: JP-A-2001-14653
Patent literature 2 : JP-A-2003-128851

### DISCLOSURE OF THE INVENTION

### PROBLEM TO BE SOLVED BY THE INVENTION

An object of the present invention is to provide an EPDM composition that can provide a good resistance to hot water at high temperatures such as 200°C or higher.

### MEANS FOR SOLVING THE PROBLEM

The object of the present invention can be attained by an EPDM composition, which comprises 100 parts by weight of blended rubber consisting of 20-80% by weight of EPDM containing 5-ethylidene-2-norbornene [ENB] as one type of diene component and 80-20% by weight of EPDM containing dicyclopentadiene [DCPD] as another type of diene component, 0.5-10 parts by weight of an organic peroxide and further 10-30 pbw of zinc oxide or titanium oxide, according to claim 1.

### EFFECT OF THE INVENTION

Seal parts produced by vulcanization molding the present EPDM composition, even if dipped into hot water at such high temperatures such as 200°C for 500 hours or 300°C for 24 hours, show well-balanced characteristics, particularly with improved compression set characteristics.

Specifically, the product longevity of seal parts can be determined mainly by the compression set characteristics, and the time when the characteristics reach a value of about 80% can be judged to be the longevity. Seal parts produced from the present EPDM composition can provide a higher improvement in the compression set by about 10% than that of the conventional ones at the same temperatures. Indeed, the longevity of the conventional one is 10 hours when dipped in hot water at 300 °C , whereas the seal parts produced from the present EPDM composition can maintain a good sealability even after 24 hours, and thus have a satisfactory hot water resistance.

### BEST MODES FOR CARRYING OUT THE INVENTION

ENB-copolymerized EPDM and DCPD-copolymerized EPDM are used as a blend in a proportion of the former to the latter of 20-80wt.% to 80-20wt.%, preferably 30-70wt.% to 70-30wt.%. The compression set characteristics can be improved by increasing the proportion of the former in the blend, whereas the hot water resistance can be improved by increasing the proportion of the latter in the blend. Seal parts, that can meet the desired use purpose can be obtained by changing the blending-proportion within said range.

An organic peroxide as a cross-linking agent can be used in a ratio of 0.5 to 10 parts by weight, preferably 2 to 7 parts by weight, to 100 parts by weight of the blended rubber. The organic peroxide for use in the invention includes, for example, t-butyl hydroperoxide, cumene hydroperoxide, di-t-butyl peroxide, t-butyl cumyl peroxide, dicumyl peroxide, 2,5-dimethyl-2,5-di(t-butylperoxy) hexane, 2,5-dimethyl-2,5-di(t-butylperoxy) hexine-3, 1,3-bis(t-butylperoxyisopropyl) benzene, 1,1-bis(t-butylperoxy)-3,3,5-benzene, 1,1-bis(t-butylperoxy)-3,3,5-trimethylcyclohexane, n-butyl-4,4-bis(t-butylperoxy) valerate, benzoyl peroxide, p-chlorobenzoyl peroxide, 2,4-dichlorobenzoyl peroxide, t-butyl peroxybenzoate, t-butylperoxy isopropyl carbonate, t-butyl benzoate.

The EPDM composition comprising the foregoing respective blend components further contain 10-30 parts by weight of zinc oxide or titanium oxide on the basis of 100 parts by weight of the blended rubber to further improve the compression set characteristics.

A cross-linking aid comprising a polyfunctional unsaturated compound such as triallyl isocyanurate, triallyl cyanurate, ethylene glycol dimethacrylate, trimethylolpropane trimethacrylate, N,N' -m-phenylene dimaleimide, a reinforcing agent or a filler comprising various carbon black or white carbon, an antioxidant are further added thereto if necessary, besides the blend components, then the composition is kneaded by any kneading means, such as mixing rolls, a Banbury mixer, various kneaders, and the composition thus kneaded is subjected to cross-linking molding typically by compression molding, injection molding, while heating at temperatures of about 100° to about 200°C for about 30 seconds to about 2 hours.

### EXAMPLES

The present invention will be described in detail below, referring to Examples.

### Comparative EXAMPLE 1

| | Parts by weight |
|---|---|
| ENB-copolymerized EPDM (EPT4070, a product made by Mitsui Chemical Co., Ltd.) | 70 |
| DCPD-copolymerized EPDM (EPT1045, a product made by the same company as above) | 30 |
| Dicumyl peroxide | 5 |
| SRF carbon black | 70 |
| Amine-based antioxidant (Nocrack white, a product made by Ouchi-Shinko Chemical Co., Ltd.) | 1.5 |
| Paraffinic process oil (PW380, a product made by Idemitsu Petrochemical Co., Ltd.) | 5 |

The foregoing respective blend components were kneaded by a kneader, and the resulting kneading product was subjected to cross-linking molding at 180°C for 6 minutes to make test pieces (150mm × 150mm × 20mm) and G25-sized O rings. The resulting test pieces and O rings were subjected to tests according to the following test items.
Normal physical properties : according to JIS K6253 and K6251 (using the test pieces)
Hot water immersion test : according to JIS K6258 (using the test pieces)
Changes in the normal state physical properties following immersion in hot water at 200°C for 500 hours and at 300°C for 24 hours, respectively, were determined
Hot water compression set : according to JIS K6262 (using the G25-sized O rings, compression ratio : 25%)
Compression sets following immersion in hot water at 200°C for 500 hours and at 300°C for 24 hours, respectively, were determined

### COMPARATIVE EXAMPLE 2

In Example 1, the amounts of ENB-copolymerized EPDM and DCPD-copolymerized EPDM were changed to 30 parts by weight and 70 parts by weight, respectively.

### EXAMPLE 1

In Comparative Example 1, 20 parts by weight of zinc oxide was further added thereto.

### EXAMPLE 2

In Comparative Example 1, the amounts of ENB-copolymerized EPDM and DCPD-copolymerized EPDM were changed to 50 parts by weight and 50 parts by weight, respectively, and 20 parts by weight of titanium oxide was added thereto.

### COMPARATIVE EXAMPLE 3

In Comparative Example 1, the amounts of ENB-copolymerized EPDM was changed to 100 parts by weight, and no DCPD-copolymerized EPDM was used at all.

### COMPARATIVE EXAMPLE 4

In Comparative Example 1, the amounts of DCPD-copolymerized EPDM was changed to 100 parts by weight, and no ENB-copolymerized EPDM was used at all.

### COMPARATIVE EXAMPLE 5

In Comparative Example 1, the amounts of ENB-copolymerized EPDM and DCPD-copolymerized EPDM were changed to 90 parts by weight and 10 parts by weight, respectively, and 20 parts by weight of titanium oxide was added thereto.

### COMPARATIVE EXAMPLE 6

In Comparative Example 1, the amounts of DCPD-copolymerized EPDM and ENB-copolymerized EPDM were changed to 90 parts by weight and 10 parts by weight, respectively.

Results obtained from the foregoing Examples and Comparative Examples are given in the following Table.

**Table**

| Test Item | Comp. Ex. 1 | Comp. Ex.2 | Ex. 1 | Ex.2 | Comp. Ex.3 | Comp. Ex.4 | Comp. Ex.5 | Comp. Ex.6 |
|---|---|---|---|---|---|---|---|---|
| [Normal state physical properties] | | | | | | | | |
| Hardness (Duro A) | 80 | 80 | 80 | 80 | 81 | 80 | 80 | 81 |
| Tensile strength (MPa) | 21.8 | 21.2 | 22.1 | 21.7 | 21.6 | 19.6 | 21.0 | 20.7 |
| Elongation (%) | 160 | 160 | 170 | 170 | 180 | 180 | 180 | 170 |
| [Hot water Immersion test] (200°C, 500 hrs) | | | | | | | | |
| ardness change (points) | -3 | -3 | -3 | -3 | -3 | -3 | -3 | -3 |
| Percent change in tensile strength (%) | -10 | -8 | -8 | -7 | -9 | -5 | -8 | -4 |
| Percent change in elongation (%) | +15 | +14 | +13 | +11 | +10 | +8 | +12 | +10 |
| Percent change in volume (%) (300°C, 24hrs) | +1.5 | +1.5 | +1.6 | +1.5 | +2.0 | +1.5 | +1.7 | +1.4 |
| Hardness change (points) | -12 | -11 | -10 | -10 | -17 | -9 | -15 | -10 |
| Percent change in tensile strength (%) | -40 | -41 | -38 | -36 | -50 | -29 | -52 | -33 |
| Percent change in elongation (%) | +60 | +55 | +57 | +55 | +100 | +44 | +93 | +47 |
| Percent change in volume (%) | +3.5 | +3.3 | +3.0 | +3.1 | +6.2 | +4.0 | +5.5 | +3.8 |
| [Hot water compression set] | | | | | | | | |
| 200°C, 500hrs (%) | 42 | 41 | 35 | 36 | 40 | 53 | 40 | 48 |
| 300°C, 24hrs (%) | 73 | 72 | 67 | 67 | 87 | 84 | 84 | 80 |

It is apparent from the foregoing results that in hot water immersion tests and hot water compression set tests at 200°C for 500 hours and at 300°C for 24 hours, respectively, all the Examples well-balanced characteristics were obtained, whereas in hot water compression set tests of all the Comparative Examples, particularly at 300°C for 24 hours, poor characteristics were obtained. Results of hot water immersion tests at 300°C for 24 hours of Comparative Examples 3 and 5 showed particularly large percent changes in elongation.

## Claims

1. A hot water-resistant seal part having a compression set, measured according to JIS K6262 (using G25-sized O-rings and a compression ratio of 25%) after hot water immersion at 300°C for 24 hours, of less than 80%, which is obtainable by vulcanization-molding an EPDM composition comprising
(i) 100 pbw of blend rubber consisting of
- 20-80 wt.-% EPDM containing 5-ethylidene-2-norbornene [ENB] as one type of diene component, and
- 80-20 wt.-% of EPDM containing dicyclopentadiene [DCPD] as another type of diene component;
(ii) 10-30 pbw of zinc oxide or titanium oxide; and
(ii) 0.5-10 pbw of an organic peroxide.

## Patentansprüche

1. Heißwasser-beständige Dichtungseinheit, die einen Druckverformungsrest von weniger als 80 % aufweist, gemessen gemäß JIS K6262 (unter Verwendung von O-Ringen in G25-Größe und einem Kompressionsverhältnis von 25 %), nach Heißwassereintauchung bei 300°C für 24 Stunden, die erhältlich ist durch Vulkanisierungsformung einer EPDM-Zusammensetzung, umfassend
(i) 100 Gew.-Teile eines gemischten Gummis bestehend aus
- 20 bis 80 Gew.% EPDM, der 5-Ethyliden-2-norbornen [ENB] als einen Typ einer Dienkomponente enthält, und
- 80 bis 20 Gew.% EPDM, der Dicyclopentadien [DCPD] als einen anderen Typ einer Dienkomponente enthält;
(ii) 10 bis 30 Gew.-Teile Zinkoxid oder Titanoxid; und
(iii) 0,5 bis 10 Gew.-Teile eines organischen Peroxids.

## Revendications

1. Pièce d'étanchéité résistante à l'eau chaude ayant une déformation permanente, mesurée selon JIS K6262 (avec des joints toriques de taille G25 et un taux de compression de 25 %) après immersion dans l'eau chaude à 300°C pendant 24 heures, inférieure à 80 %, qui peut être obtenue par moulage avec vulcanisation d'une composition de EPDM comprenant
(i) 100 pep de caoutchouc mélangé consistant en
- 20-80 % en poids de EPDM contenant du 5-éthylidène-2-norbomène [ENB] comme type de composant diénique, et
- 80-20 % en poids de EPDM contenant du dicyclopentadiène [DCPD] comme autre type de composant diénique ;
(ii) 10-30 pep d'oxyde de zinc ou d'oxyde de titane ; et
(ii) 0,5-10 pep d'un peroxyde organique.
